# EUROPÄISCHE PATENTSCHRIFT

(11) **EP 1 174 299 B1**
(45) Veröffentlichungstag und Bekanntmachung des Hinweises auf die Patenterteilung: **14.02.2007**
(21) Anmeldenummer: 01116966.1
(22) Anmeldetag: 12.07.2001
(51) Int. Cl.: B60J 10/12, B60J 7/04

(54) **Kunststoffdeckel für Fahrzeuge**
Plastic lid for vehicle
Panneau en plastique pour véhicule

(30) Priorität: 21.07.2000 DE 10035912
(43) Veröffentlichungstag der Anmeldung: 23.01.2002
(73) Patentinhaber: Webasto Vehicle Systems International GmbH, 82131 Stockdorf (DE)
(72) Erfinder: De Gaillard, Francois, 85390 Mouilleron en Pareds (FR); Kölbl, Michael, 82061 Neuried (DE)
(74) Vertreter: Wiese, Gerhard

(56) Entgegenhaltungen:
- WO-A-97/03855
- DE-A- 19 963 276
- DE-C- 19 716 390

## Beschreibung

Die vorliegende Erfindung betrifft eine Deckeleinheit zum Verschließen einer in der festen Dachhaut eines Fahrzeugdaches vorgesehenen Dachöffnung, mit einem Deckelelement aus mindestens teilweise transparentem Kunststoff und einem entlang dem Seitenrand des Deckelelements verlaufenden Verstärkungsrahmen, insbesondere aus Metall, der eine den Seitenrand des Deckelelements umgebende Dichtung zur Anlage gegen eine im wesentlichen senkrecht verlaufende dachfeste Dichtfläche trägt.

Deckeleinheiten aus Kunststoff erfreuen sich aufgrund ihres geringen Gewichts, ihrer gegenüber Glasdeckeln erhöhten Bruchsicherheit und ihrer hohen Designfreiheit steigender Beliebtheit im Fahrzeugbau. Diesen Vorteilen steht jedoch entgegen, dass die üblicherweise verwendeten Kunststoffe einen gegenüber Metall deutlich höheren Wärmeausdehnungskoeffizienten haben, was sich bei den schwankenden Temperaturen, welchen Fahrzeuge gewöhnlich ausgesetzt sind, als problematisch erweisen kann.

Eine Deckeleinheit der eingangs genannten Art ist in WO 97/03855 beschrieben. Bei dieser Deckeleinheit sind nahe dem Rand des Deckelelements eine Vielzahl von Stiften an die Unterseite des Deckelelements einstückig angeformt. Der ebenfalls an der Unterseite des Deckelelements angeordnete Verstärkungsrahmen weist schlitzförmige Führungskanäle für die Stifte auf, wobei die Schlitze alle auf durch den Schwerpunkt des Deckelelements verlaufenden Linien liegen. An einem Randbereich des Verstärkungsrahmens ist eine Dichtung befestigt. Diese Deckeleinheit ist in zweifacher Hinsicht nachteilig. Zum einen ist die Deckeleinheit aufgrund der Vielzahl der anzuformenden und zu montierenden Stiftverbindungen recht aufwendig in der Fertigung und Montage. Zum anderen erhöht eine thermische Ausdehnung des Deckelelements den Anpressdruck der Dichtung gegen den Dachrahmen, was zu einem Verklemmen des Deckels führen kann.

Eine ähnliche Deckeleinheit ist in der DE 198 33 934 A1 beschrieben. Bei der hier gezeigten Fenstervorrichtung für Kraftfahrzeuge sind an die Unterseite eines Kunststoffdeckels eine Mehrzahl von Halterungen angeformt, an welchen ein Verstärkungsrahmen angeschraubt wird. Um bei einer thermischen Ausdehnung des Deckelelements eine Relativbewegung zwischen dem Deckelelement und dem Verstärkungsrahmen zu ermöglichen, sind in den Halterungen Löcher vorgesehen, deren Durchmesser deutlich größer als jener der zum Befestigen des Deckelelements benutzten Schrauben ist. Um ein Durchfallen der Schrauben durch die übergroßen Löcher zu verhindern, sind daher auf die Schrauben zusätzlich Beilagscheiben aufgesetzt. Das aus DE 198 33 934 A1 bekannte Deckelelement bedarf ebenfalls einer komplizierten und damit kostspieligen und zeitaufwendigen Fertigung. Werden zudem nicht alle der Schrauben gleichfest angezogen, so kann es bei einer wiederholten Ausdehnung und Kontraktion des Deckelelements zu einer Fehlpositionierung der Deckeleinheit bezüglich des Dachrahmens und damit zu einem Verklemmen der Deckeleinheit kommen.

Des weiteren ist in der DE 30 41 505 C2 eine starre Deckeleinheit der eingangs genannten Art beschrieben, bei welcher das Deckelelement von Verstärkungsrahmen eingefasst ist. Da die Verstärkungsrahmen hierbei einer thermischen Ausdehnung des Deckelelements im Wege stehen, kann es unter Temperatureinfluss zu Verspannungen und insbesondere zu unerwünschten Verwölbungen des Deckelelements kommen.

In Anbetracht der den bekannten Deckeleinheiten anhaftenden Probleme ist es eine Aufgabe der vorliegenden Erfindung, eine Deckeleinheit der eingangs genannten Art zu schaffen, die einfacher und kostengünstiger zu fertigen und zu montieren ist. Des weiteren soll die Deckeleinheit die Bereitstellung eines Daches mit sogenanntem Flush-Design ermöglichen, das heißt, einem Dach, bei welchen das Deckelelement und die Dichtung plan zueinander sind und die Dichtung nicht unter dem Einfluss des Deckelelements, insbesondere bei einer Wärmeexpansion desselben, nach oben aus der Dachebene heraus verwölbt wird, was zu unerwünschten Windgeräuschen führen kann.

Diese Aufgabe wird bei einer Deckeleinheit der eingangs genannten Art dadurch gelöst, dass der Verstärkungsrahmen unter Verwendung eines flexiblen Klebstoffs derart mit dem Deckelelement verklebt ist, dass sich das Deckelelement in Querrichtung gegenüber dem Verstärkungsrahmen bewegen kann, um eine thermische Ausdehnung des Deckelelements zu ermöglichen, und dass die Dichtung einen von einer thermischen Ausdehnung des Deckelelements im wesentlichen unbeeinflussten Dachdichtungsbereich zur Anlage gegen die dachfeste Dichtfläche sowie einen Deckeldichtungsbereich zur Kompensation einer thermischen Ausdehnung des Deckelelements aufweist. Während das Bereitstellen des von einer thermischen Ausdehnung des Deckelelements im wesentlichen unbeeinflussten Dachdichtungsbereichs ein Verwölben der zwischen dem Deckelelement und dem Dachrahmen vorgesehenen Dichtung ausschließt, lässt die flexible Klebeverbindung zwischen Verstärkungsrahmen und Deckelelement eine gewisse Bewegung des Deckelelements gegenüber dem Verstärkungsrahmen zu, so dass auch ein Verwölben des Deckelelements in sich ausgeschlossen wird. Um dennoch die Dichtwirkung zwischen Deckelelement und fester Dachfläche auch bei unterschiedlichen Ausdehnungen des Deckelelements sicherzustellen, ist ein Deckeldichtungsbereich vorgesehen, der thermische Ausdehnungen des Deckelelements aufnimmt oder kompensiert.

Weitere Ausgestaltungen der Erfindung ergeben sich aus den Unteransprüchen.

Insbesondere kann der Verstärkungsrahmen einen im wesentlichen parallel zum Seitenrand des Deckelelements verlaufenden Randbereich aufweisen, der eine Anlagefläche sowohl für den Dachdichtungsbereich als auch für den Deckeldichtungsbereich bildet, wobei der Randbereich des Verstärkungsrahmens einen im wesentlichen senkrecht verlaufenden Flächenbereich umfassen kann.

Die Dichtung kann auf den Randbereich des Verstärkungsrahmens oder aber auf einen am Verstärkungsrahmen separat ausgeformten Dichtungsträger aufgesteckt sein, wobei es sich dann als vorteilhaft erweist, wenn die Dichtung eine Verstärkungseinlage, beispielsweise aus Stahl, enthält, um die Form der Dichtung insbesondere dort, wo diese aufgesteckt ist, aufrechtzuhalten und so ein ungewolltes Lösen der Dichtung von dem Verstärkungsrahmen zu verhindern.

Die Dichtung kann jedoch auch mit dem Verstärkungsrahmen verklebt sein oder verrastet oder in anderer Weise verbunden sein.

Eine Kompensation einer thermischen Ausdehnung des Deckelelements mittels des Deckeldichtungsbereichs lässt sich nach der Erfindung auf mehrere Arten bewerkstelligen. Gemäß einer bevorzugten Ausführungsform sind der Deckeldichtungsbereich und der mit diesem zusammenwirkende Teil des Deckelelements so gestaltet und angeordnet, dass das Deckelelement bei einem eine Kontraktion oder eine Ausdehnung des Deckelelements bewirkenden Temperatureinfluss auf dem Deckeldichtungsbereich gleiten kann.

Durch geeignete Formgebung können hierbei der Deckeldichtungsbereich und der mit diesem zusammenwirkende Teil des Deckelelements so gestaltet und angeordnet sein, dass eine Gleitbewegung des Deckelelements gegenüber dem Deckeldichtungsbereich im wesentlichen keine Verformung des Deckeldichtungsbereichs hervorruft. Dies lässt sich beispielsweise dadurch erreichen, dass der Deckeldichtungsbereich und das Deckelelement entlang einer Eingriffsfläche zusammenwirken, die im wesentlichen senkrecht zu der Richtung einer durch Temperatureinfluss hervorgerufenen Relativbewegung des Deckelelements bezüglich des Verstärkungsrahmens verläuft. Um eine Bewegung der Eingriffsflächen gegeneinander zu erleichtern, kann ferner im Kontaktbereich zwischen dem Deckeldichtungsbereich und dem Deckelelement ein Gleitlack vorgesehen sein.

Die Anordnung kann jedoch auch so getroffen sein, dass der Deckeldichtungsbereich zur Kompensation einer thermischen Ausdehnung des Deckelelements plastisch verformbar ist.

Sollen zwecks Verwirklichung eines Flush-Designs die sichtbare Oberseite der Dichtung und die Oberseite zumindest des der Dichtung benachbarten Bereichs des Deckelelements im wesentlichen komplanar verlaufen, so kann dafür gesorgt sein, dass der Seitenrand des Deckelelements einen elastischen Teil des Deckeldichtungsbereichs übergreift, so dass im Falle einer thermischen Ausdehnung des Deckelelements der elastischen Teil des Deckeldichtungsbereichs unter den Seitenrand des Deckelelements abtaucht.

In Abhängigkeit von dem zur Unterbringung der einzelnen Komponenten erforderlichen Platzbedarf sowie von der mittels dem Verstärkungsrahmen bereitzustellenden Steifigkeit kann der Randbereich des Verstärkungsrahmens einen tiefergelegten Bereich umfassen, in welchem der Deckeldichtungsbereich angeordnet ist.

Bevorzugte Ausführungsbeispiele der Erfindung werden im folgenden unter Bezugnahme auf die Zeichnungen erläutert. Es zeigen:
- FIG. 1: einen Schnittansicht durch ein Fahrzeugdach mit einer Deckeleinheit gemäß einer ersten Ausführungsform;
- FIG. 2: einen Schnitt durch eine Deckeleinheit gemäß einer zweiten Ausführungsform;
- FIG. 3: einen Schnitt durch eine Deckeleinheit gemäß einer dritten Ausführungsform; und
- FIG. 4: einen Schnitt durch eine Deckeleinheit gemäß einer vierten Ausführungsform;

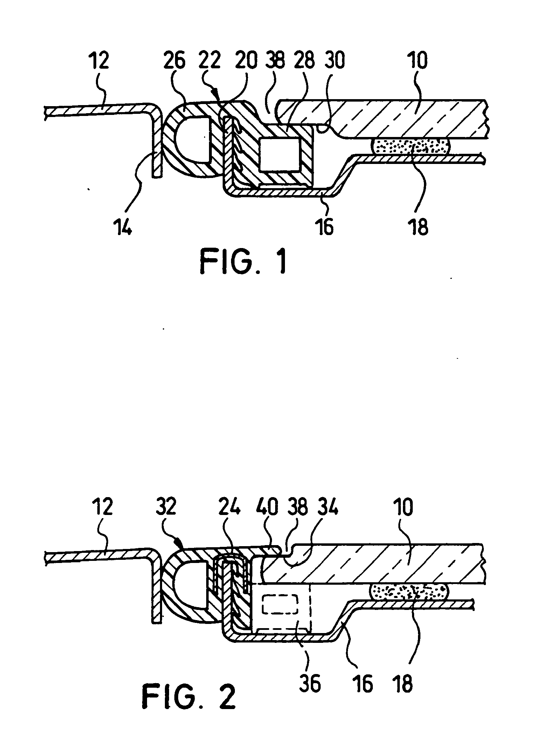

In FIG. 1 ist ein Fahrzeugdach im Bereich einer Dachöffnung gezeigt, die mit einem Deckelelement 10 verschlossen ist. In der vereinfachten Darstellung gemäß FIG. 1 ist die feste Dachhaut 12 im Bereich der Dachöffnung als nach unten umgeschlagen dargestellt. Es versteht sich, dass die Dachöffnung auch von einem nicht dargestellten Dachrahmen eingefasst sein kann, der dann eine im wesentlichen senkrechte Dichtfläche, wie sie in der Zeichnung bei 14 angedeutet ist, bereitstellt. Das Deckelelement 10 besteht aus einem mindestens teilweise transparenten Kunststoff, beispielsweise aus Polycarbonat.

Auf die Unterseite des Deckelelements 10 ist ein Verstärkungsrahmen 16 aufgeklebt, der aus einem Material gefertigt ist, welches einen geringen Wärmeausdehnungskoeffizienten aufweist. Beispielweise kann es sich bei dem Verstärkungsrahmen 16 um ein Blechprofilteil handeln. Um das Deckelelement 10 nicht an einer Expansion unter dem Einfluss von Wärme zu hindern, wird zu Befestigung des Verstärkungsrahmens 16 an dem Deckelelement 10 ein flexibler Klebstoff 18 verwendet. Der in den Zeichnungen dargestellte Verstärkungsrahmen 16 weist einen nach oben gebogenen, im wesentlichen senkrecht verlaufenden Flächenbereich 20 auf, auf den eine Dichtung 22 aufgesteckt ist.

Die Dichtung 22 gliedert sich in einen in FIG. 1 links von dem senkrecht verlaufenden Flächenbereich 20 des Verstärkungsrahmens 16 angeordneten Dachdichtungsbereich 26, der für eine Abdichtung zwischen der Deckeleinheit und der festen Dachhaut 12 sorgt, sowie einen rechts von dem Flächenbereich 20 angeordneten Deckeldichtungsbereich 28 auf dem der Seitenrand des Kunststoff-Deckelelements 10 aufliegt. Der Seitenrand des Deckelelements 10 kann hierbei zwecks Erreichen einer möglichst geringen Bauhöhe der Deckeleinheit eine Stufe 30 aufweisen, wie dies in FIG. 1 dargestellt ist.

Steigt die Außentemperatur an, so dehnt sich das aus Kunststoff gefertigte Deckelelement 10 merklich aus, wohingegen der aus Metall gefertigte und in der Regel umlaufende Verstärkungsrahmen 16 nur eine vernachlässigbare Ausdehnung erfährt. Nachdem die Position und Größe des Verstärkungsrahmens 16 die Anpresskraft des Dachdichtungsbereichs 26 gegen die im wesentlichen senkrecht verlaufende dachfeste Dichtfläche 14 bestimmt, der Verstärkungsrahmen 16 jedoch seine Position und Größe auch bei Temperaturänderungen beibehält, ist die Dichtwirkung der Deckeleinheit gegenüber der festen Dachfläche von Temperatureinflüssen, die zu einer Expansion oder Kontraktion des Deckelelements führen, entkoppelt. Eine Expansion oder Kontraktion des Deckelelements wird vielmehr von dem Deckeldichtungsbereich 28 aufgenommen, auf welchem der Seitenrand des Deckelelements 10 frei gleiten kann. Um die Gleitwirkung zu unterstützen, kann im Kontaktbereich zwischen dem Deckelelement 10 und dem Deckeldichtungsbereich 28 ein härteres Dichtungsmaterial verwendet werden oder es kann in diesem Bereich ein Gleitlack vorgesehen sein.

Bei der abgewandelten Ausführungsform gemäß FIG. 2 ist im Deckeldichtungsbereich 28 einer Dichtung 32 eine Lippe 40 vorgesehen, die von oben auf einer entlang dem Seitenrand des Deckelelements 10 ausgebildeten Stufe 34 aufliegt. Obschon bereits die Lippe 40 für eine ausreichende Abdichtung zwischen dem Deckelelement 10 und der Dichtung 32 sorgen kann, kann der Deckeldichtungsbereich 28 ähnlich wie bei des Ausführungsform gemäß FIG. 1 einen Dichtungsbereich 36, beispielsweise in Form eines Hohlprofils, aufweisen, auf welchem der Seitenrand des Deckelelements 10 aufliegt und der in FIG. 2 in gestrichelten Linien angedeutet ist. Zur Stabilisierung der Form der Dichtung 32 kann ferner eine Einlage 24, insbesondere eine Stahleinlage, in die Dichtung eingelegt sein.

Es versteht sich, dass bei den Ausführungsformen nach den FIGN. 1 und 2, gemäß welchen im Falle einer thermischen Expansion des Deckelelements keine Verformung der Dichtung auftreten soll, an der Dichtung 22 bzw. 32 ein Freiraum 38 belassen werden muss, in welchen das Deckelelement 10 hinein expandieren kann. Wie sich insbesondere aus FIG. 2 ergibt, kann durch Wahl der Abmessungen in hohem Maße ein Flush-Design verwirklicht werden, bei welchem das Deckelelement, die Dichtung und die feste Dachfläche eine nahezu durchgehende Fläche bilden.

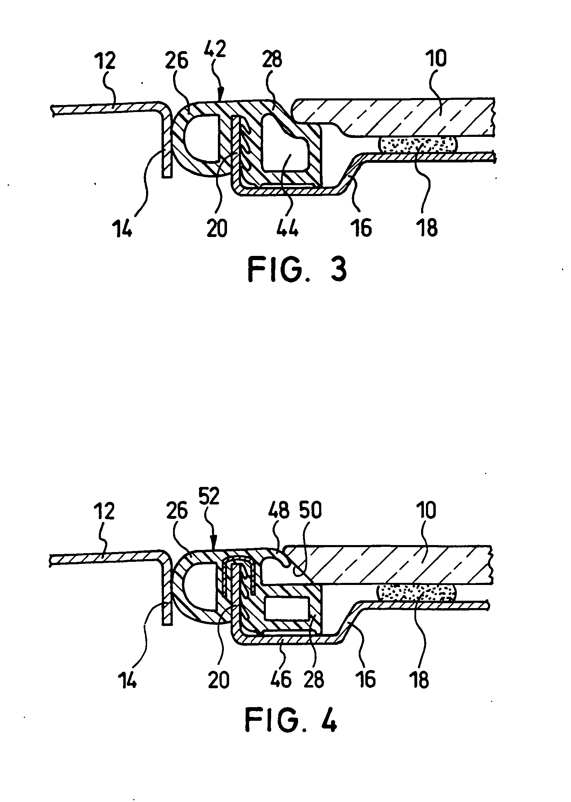

Während bei den Ausführungsformen nach den FIGN. 1 und 2 keine Verformung der Dichtung auftritt, sondern das Deckelelement gegenüber dem Deckeldichtungsbereich gleiten kann, zeigen die FIGN. 3 und 4 Ausführungsformen, bei welchen der Deckeldichtungsbereich bei einer Expansion des Deckelelements verformt wird, bei welchen jedoch durch geeignete konstruktive Maßnahmen dafür gesorgt ist, dass sich die Dichtung nicht nach oben aus der Ebene des Deckelelements heraus verwölbt.

Entsprechend FIG. 3 ist ähnlich wie bei FIGN. 1 und 2 an der Unterseite eines Deckelelements 10 mittels eines flexiblen Klebstoffs 18 ein Verstärkungsrahmen 16 angebracht. Auf einen im wesentlichen senkrecht verlaufenden Flächenbereich 20 ist eine Dichtung 42 aufgesteckt, die einen Dachdichtungsbereich 26 sowie einen Deckeldichtungsbereich 28 aufweist. Hierbei ist jedoch im oberen Teil des Deckeldichtungsbereichs 28 keine Stufe vorgesehen, wie dies bei der Ausführungsform nach FIG. 1 der Fall war, sondern weist die Dichtung 42 eine Hohlkammer 44 auf, welche eine Deformation der Dichtung aufnimmt, wenn diese bei einer Expansion des Deckelelements 10 verpresst wird. Analog wie bei den Ausführungsformen nach den FIGN. 1 und 2 bildet der senkrecht verlaufenden Flächenbereich 20 hierbei einen Anschlag für den Deckeldichtungsbereich 28, so dass der Dachdichtungsbereich 26 keine Veränderung seines Anpressdrucks gegen die dachfeste Dichtfläche 14 erfährt, wenn der Deckeldichtungsbereich 28 durch eine Expansion des Deckelelements 10 komprimiert wird. Wie aus FIG. 3 ersichtlicht, lässt sich mit einer derartigen Anordnung ebenfalls ein hohes Maß an Flush-Design verwirklichen, da als einzige Unebenheiten in der Dachfläche nur die im Vergleich zu bekannten Dachsystemen äußerst klein ausfallenden Vertiefungen entlang den Kontaktflächen zwischen dem Dachdichtungsbereich 26 und der festen Dachhaut 12 sowie zwischen dem Deckeldichtungsbereich 28 und dem Deckelelement 10 in Erscheinung treten.

Die FIG. 4 zeigt eine abgewandelte Ausführungsform der in Fig. 3 dargestellten Deckeleinheit. Wiederum ist an die Unterseite eines Deckelelements 10 mittels eines flexiblen Klebstoffs 18 ein Verstärkungsrahmen 16 angebracht. Auf einem tiefergelegten Bereich 46 des Verstärkungsrahmens 16 sitzt eine Dichtung 52 mit ihrem Deckeldichtungsbereich 28 auf, wobei die Dichtung 52 ferner einen Dachdichtungsbereich 26 umfasst, der die Deckeleinheit gegen die feste Dachfläche 12 eines Fahrzeugs abdichtet. Zur Fixierung der Dichtung 52 am Verstärkungsrahmen 16 kann diese wiederum auf einen im wesentlichen senkrecht verlaufenden Flächenbereich 20 des Verstärkungsrahmens 16 aufgesteckt sein, wobei zum Erhalt der Form der Dichtung 52 eine Einlage entsprechend der in FIG. 2 gezeigten Einlage 24 vorgesehen sein kann. Natürlich kann falls erwünscht die Dichtung stattdessen oder zusätzlich mit einem Klebemittel oder durch Verrasten an dem Verstärkungsrahmen 16 befestigt sein.

Anders als bei der Ausführungsform nach FIG. 3 weist die Dichtung 52 gemäß FIG. 4 in ihrem Deckeldichtungsbereich 28 eine Lippe 48 auf, die nach unten unter einen abgeschrägten Rand 50 des Deckelelements 10 abtaucht. Dehnt sich das Deckelelement 10 infolge einer Erwärmung weiter aus, so wird die Lippe 48 fortschreitend unter den Rand 50 des Deckelelements 10 gedrückt. Die Gleitwirkung zwischen der Lippe 48 dem Rand 50 lässt sich durch Auftrag eines Gleitmittels, insbesondere eines Gleitlacks, verbessern.

Es versteht sich, dass sich das vorliegend beschriebene Konzept sowohl auch Festdeckeldächer anwenden lässt als auch auf Dächer mit beweglichen Deckelelementen, wie beispielsweise Schiebedächer, Schiebehebedächer, Spoilerdächer, Lamellendächer und dergleichen.

### Bezugszeichenliste

- 10: Deckelelement
- 12: Dachhaut
- 14: senkrechte Dichtfläche
- 16: Verstärkungsrahmen
- 18: flexibler Klebstoff
- 20: senkrecht verlaufender Flächenbereich von 16
- 22: Dichtung
- 24: Einlage
- 26: Dachdichtungsbereich
- 28: Deckeldichtungsbereich
- 30: Stufe
- 32: Dichtung
- 34: Stufe
- 36: Dichtungsbereich
- 38: Freiraum
- 40: Lippe
- 42: Dichtung
- 44: Hohlkammer
- 46: tiefergelegter Bereich von 16
- 48: Lippe
- 50: abgeschrägter Rand von 10
- 52: Dichtung

## Patentansprüche

1. Deckeleinheit zum Verschließen einer in der festen Dachhaut (12) eines Fahrzeugdaches vorgesehenen Dachöffnung, mit einem Deckelelement (10) aus mindestens teilweise transparentem Kunststoff und einem entlang dem Seitenrand des Deckelelements verlaufenden Verstärkungsrahmen (16), insbesondere aus Metall, der eine den Seitenrand des Deckelelements umgebende Dichtung (22, 32, 42, 52) zur Anlage gegen eine im wesentlichen senkrecht verlaufende dachfeste Dichtfläche (14) trägt, **dadurch gekennzeichnet, dass** der Verstärkungsrahmen (16) mittels eines eine thermische Ausdehnung des Deckelelements in Querrichtung gegenüber dem Verstärkungsrahmen ermöglichenden flexiblen Klebstoffs (18) mit dem Deckelelement (10) verklebt ist, und dass die Dichtung (22, 32, 42, 52) einen von einer thermischen Ausdehnung des Deckelelements im wesentlichen unbeeinflussten Dachdichtungsbereich (26) zur Anlage gegen die dachfeste Dichtfläche (14) sowie einen Deckeldichtungsbereich (28) zur Kompensation einer thermischen Ausdehnung des Deckelelements (10) aufweist.

2. Deckeleinheit nach Anspruch 1, **dadurch gekennzeichnet, dass** der Verstärkungsrahmen (16) einen im wesentlichen parallel zum Seitenrand des Deckelelements (10) verlaufenden Randbereich (20) aufweist, der eine Anlagefläche sowohl für den Dachdichtungsbereich (26) als auch für den Deckeldichtungsbereich (28) bildet.

3. Deckeleinheit nach Anspruch 2, **dadurch gekennzeichnet, dass** der Randbereich (20) des Verstärkungsrahmens (16) einen im wesentlichen senkrecht verlaufenden Flächenbereich umfasst.

4. Deckeleinheit nach einem der vorhergehenden Ansprüche, **dadurch gekennzeichnet, dass** der Verstärkungsrahmen (16) einen Dichtungsträger (20) aufweist, auf den die Dichtung (22, 32, 42, 52) aufgesteckt ist.

5. Deckeleinheit nach Anspruch 2 oder 3, **dadurch gekennzeichnet, dass** die Dichtung (22, 32, 42, 52) auf den Randbereich (20) des Verstärkungsrahmens (16) aufgesteckt ist.

6. Deckeleinheit nach Anspruch 4 oder 5, **dadurch gekennzeichnet, dass** die Dichtung (22, 32, 42, 52) eine Verstärkungseinlage (24), insbesondere aus Stahl enthält.

7. Deckeleinheit nach einem der vorhergehenden Ansprüche, **dadurch gekennzeichnet, dass** die Dichtung (22, 32, 42, 52) mit dem Verstärkungsrahmen (16) verklebt ist.

8. Deckeleinheit nach einem der vorhergehenden Ansprüche, **dadurch gekennzeichnet, dass** der Deckeldichtungsbereich (28) und der mit diesem zusammenwirkende Teil des Deckelelements (10) so gestaltet und angeordnet sind, dass das Deckelelement unter Temperatureinfluss auf dem Deckeldichtungsbereich gleiten kann.

9. Deckeleinheit nach Anspruch 8, **dadurch gekennzeichnet, dass** der Deckeldichtungsbereich (28) und der mit diesem zusammenwirkende Teil des Deckelelements (10) so gestaltet und angeordnet sind, dass eine Gleitbewegung des Deckelelements gegenüber dem Deckeldichtungsbereich im wesentlichen keine Verformung des Deckeldichtungsbereichs hervorruft.

10. Deckeleinheit nach Anspruch 9, **dadurch gekennzeichnet, dass** der Deckeldichtungsbereich (28) und das Deckelelement (10) entlang einer Eingriffsfläche zusammenwirken, die im wesentlichen senkrecht zu der Richtung einer durch Temperatureinfluss hervorgerufenen Relativbewegung des Deckelelements bezüglich des Verstärkungsrahmens (16) verläuft.

11. Deckeleinheit nach einem der Ansprüche 8 bis 10, **dadurch gekennzeichnet, dass** im Kontaktbereich zwischen dem Deckeldichtungsbereich (28) und dem Deckelelement (10) ein Gleitlack vorgesehen ist.

12. Deckeleinheit nach einem der Ansprüche 1 bis 7, **dadurch gekennzeichnet, dass** der Deckeldichtungsbereich (28) zur Kompensation einer thermischen Ausdehnung des Deckelelements (10) plastisch verformbar ist.

13. Deckeleinheit nach einem der vorhergehenden Ansprüche, **dadurch gekennzeichnet, dass** die sichtbare Oberseite der Dichtung (22, 32, 42, 52) und die Oberseite zumindest des der Dichtung benachbarten Bereichs des Deckelelements (10) im wesentlichen komplanar verlaufen.

14. Deckeleinheit nach Anspruch 12 oder 13, **dadurch gekennzeichnet, dass** der Seitenrand des Deckelelements (10) einen elastischen Teil (44, 48) des Deckeldichtungsbereichs (28) übergreift, so dass im Falle einer thermischen Ausdehnung des Deckelelements der elastischen Teil des Deckeldichtungsbereichs unter den Seitenrand (50) des Deckelelements abtaucht.

15. Deckeleinheit nach einem der vorhergehenden Ansprüche, **dadurch gekennzeichnet, dass** der Randbereich des Verstärkungsrahmens (16) einen tiefergelegten Bereich (46) umfasst, in welchem der Deckeldichtungsbereich (28) angeordnet ist.

16. Fahrzeugdach mit einer Deckeleinheit nach einem der vorhergehenden Ansprüche.

## Claims

1. Panel unit for closing a roof opening in the solid skin (12) of the roof of a motor vehicle, having a panel element (10) made from at least partially transparent plastic and a reinforcing frame (16), in particular composed of metal, extending along the side of the panel element and bearing a seal (22, 32, 42, 52) surrounding the edge of the panel element for contact with a roof-mounted sealing surface (14) extending essentially vertically, **characterized in that** the reinforcing frame (16) is adhesively bonded to the panel element (10) by means of a flexible adhesive (18) allowing thermal expansion of the panel element at right angles to the reinforcing frame, and **in that** the seal (22, 32, 42, 52) has a roof sealing area (26), essentially unaffected by thermal expansion of the panel element, in contact with the roof mounted sealing surface (14), and a panel sealing region (28) to compensate for thermal expansion of the panel element (10).

2. Panel unit according to Claim 1, **characterized in that** the reinforcing frame (16) has an edge area (20) extending essentially parallel to the side edge of the panel element (10) and forming a contact surface for both the roof sealing area (26) and the panel sealing area (28).

3. Panel unit according to Claim 2, **characterized in that** the edge area (20) of the reinforcing frame (16) comprises a surface area extending essentially vertically.

4. Panel unit according to one of the preceding claims, **characterized in that** the reinforcing frame (16) has a seal carrier (20) on to which the seal (22, 32, 42, 52) is slipped.

5. Panel unit according to Claim 2 or 3, **characterized in that** the seal (22, 32, 42, 52) is slipped on to the edge area (20) of the reinforcing frame (16).

6. Panel unit according to Claim 4 or 5, **characterized in that** the seal (22, 32, 42, 52) includes a reinforcing insert (24), in particular composed of steel.

7. Panel unit according to one of the preceding claims, **characterized in that** the seal (22, 32, 42, 52) is adhesively bonded to the reinforcing frame (16).

8. Panel unit according to one of the preceding Claims, **characterized in that** the panel sealing area (28) and the part of the panel element (10) interacting with the latter are designed and arranged such that the panel element can slide on the panel sealing area under the influence of temperature.

9. Panel unit according to Claim 8, **characterized in that** the panel sealing area (28) and the part of the panel element (10) interacting with the latter are designed and arranged such that a sliding motion of the panel element against the panel sealing area causes essentially no deformation of the panel sealing area.

10. Panel unit according to Claim 9, **characterized in that** the panel sealing area (28) and the panel element (10) interact along an engaging surface, which extends substantially at right angles to the direction of a movement of the panel element relative to the reinforcing frame (16) occasioned by the influence of temperature.

11. Panel unit according to one of Claims 8 to 10, **characterized in that** a lubricating varnish is provided in the contact area between the panel sealing area (28) and the panel element (10).

12. Panel unit according to one of Claims 1 to 7, **characterized in that** the panel sealing area (28) can be deformed plastically to compensate for thermal expansion of the panel element (10).

13. Panel unit according to one of the preceding claims, **characterized in that** the visible upper side of the seal (22, 32, 42, 52) runs so as to be substantially coplanar with the upper side at least of the area of the panel element (10) adjacent to the seal.

14. Panel unit according to Claim 12 or Claim 13, **characterized in that** the side edge of the panel element (10) extends over an elastic part (44, 48) of the panel sealing area (28) such that, in the event of thermal expansion of the panel element, the elastic component of the panel sealing area descends under the side edge (50) of the panel element.

15. Panel unit according to one of the preceding claims, **characterized in that** the edge area of the reinforcing frame (16) comprises a recessed area (46), in which the panel sealing area (28) is located.

16. Vehicle roof having a panel unit according to one of the preceding claims.

## Revendications

1. Unité de couvercle ou de couverture destinée à fermer une ouverture de toit prévue dans la membrane ou peau fixe de toit (12) d'un toit de véhicule, avec un élément de couvercle ou de couverture (10) en matière plastique transparente au moins en partie et d'un cadre de renforcement (16) passant le long du bord latéral de l'élément de couvercle ou de couverture, en particulier en métal, lequel porte une garniture (22, 32, 42, 52) entourant le bord latéral de l'élément de toit et destinée à prendre appui contre une surface d'étanchéité (14) à extension essentiellement verticale et solidaire du toit, **caractérisée en ce que** le cadre de renforcement (16) est collé avec l'élément de couvercle ou de couverture (10) au moyen d'une substance adhésive (18) flexible permettant une dilatation thermique de l'élément panneau dans le sens transversal par rapport au cadre de renforcement, et **en ce que** la garniture (22, 32, 42, 52) présente une zone d'étanchéité du toit (26) essentiellement non affectée par une dilatation thermique de l'élément de couvercle ou de couverture, destinée à prendre appui contre la surface d'étanchéité (14) solidaire du toit, ainsi qu'une zone d'étanchéité (28) du couvercle ou de la couverture destinée à compenser une dilatation thermique de l'élément de couvercle ou de couverture (10).

2. Unité de couvercle ou de couverture selon la revendication 1, **caractérisée en ce que** le cadre de renforcement (16) présente une zone marginale (20) essentiellement parallèle au bord latéral de l'élément de couvercle ou de couverture, ladite zone marginale formant une surface d'appui pour la zone d'étanchéité du toit (26) mais également pour la zone d'étanchéité du couvercle (28).

3. Unité de couvercle ou de couverture selon la revendication 2, **caractérisée en ce que** la zone marginale (20) du cadre de renforcement (16) comporte une zone de surface essentiellement verticale.

4. Unité de couvercle ou de couverture selon l'une quelconque des revendications précédentes, **caractérisée en ce que** le cadre de renforcement (16) présente un support d'étanchéité (20), sur lequel est rapportée la garniture (22, 32, 42, 52).

5. Unité de couvercle ou de couverture selon la revendication 2 ou 3, **caractérisée en ce que** la garniture (22, 32, 42, 52) est rapportée sur la zone marginale (20) du cadre de renforcement (16).

6. Unité de couvercle ou de couverture selon la revendication 4 ou 5, **caractérisée en ce que** la garniture (22, 32, 42, 52) contient une pièce insérée de renforcement (24), en particulier en acier.

7. Unité de couvercle ou de couverture selon l'une quelconque des revendications précédentes, **caractérisée en ce que** la garniture (22, 32, 42, 52) est collée avec le cadre de renforcement (16).

8. Unité de couvercle ou de couverture selon l'une quelconque des revendications précédentes, **caractérisée en ce que** la zone d'étanchéité du panneau (28) et la partie de l'élément de couvercle ou de couverture (10) co-agissant avec celle-ci sont conçues et disposées de telle sorte que l'élément de couvercle ou de couverture peut glisser sur la zone d'étanchéité du couvercle sous l'effet de la température.

9. Unité de couvercle ou de couverture selon la revendication 8, **caractérisée en ce que** la zone d'étanchéité du couvercle (28) et la partie de l'élément de couvercle ou de couverture (10) co-agissant avec celle-ci sont conçues et disposées de telle façon qu'un mouvement de glissement de l'élément de couvercle ou de couverture par rapport à la zone d'étanchéité du couvercle n'entraîne sensiblement aucune déformation de la zone d'étanchéité du couvercle.

10. Unité de couvercle ou de couverture selon la revendication 9, **caractérisée en ce que** la zone d'étanchéité du couvercle (28) et l'élément de couvercle ou de couverture (10) co-agissent le long d'une surface d'engrènement ou d'engagement, qui s'étend essentiellement de façon perpendiculaire au sens d'un mouvement relatif de l'élément de couvercle ou de couverture engendré par l'effet de la température par rapport au cadre de renforcement (16).

11. Unité de couvercle ou de couverture selon l'une quelconque des revendications 8 à 10, **caractérisée en ce qu'**un vernis de glissement est prévu dans la zone de contact entre la zone d'étanchéité du couvercle (28) et l'élément de couvercle ou de couverture (10).

12. Unité de couvercle ou de couverture selon l'une quelconque des revendications 1 à 7, **caractérisée en ce que** la zone d'étanchéité du couvercle (28) peut subir une déformation plastique pour compenser une dilatation thermique de l'élément de couvercle ou de couverture (10).

13. Unité de couvercle ou de couverture selon l'une quelconque des revendications précédentes, **caractérisée en ce que** la face supérieure visible de la garniture (22, 32, 42, 52) et la face supérieure au moins de la zone de l'élément panneau (10) adjacente à la garniture sont essentiellement coplanaires.

14. Unité de couvercle ou de couverture selon la revendication 12 ou 13, **caractérisé en ce que** le bord latéral de l'élément de couvercle ou de couverture (10) recouvre une partie élastique (44, 48) de la zone d'étanchéité du panneau (28) de sorte qu'en cas de dilatation thermique de l'élément de couvercle ou de couverture, la partie élastique de la zone d'étanchéité du panneau plonge sous le bord latéral (50) de l'élément panneau.

15. Unité de couvercle ou de couverture selon l'une quelconque des revendications, **caractérisée en ce que** la zone marginale du cadre de renforcement (16) comporte une zone située plus en profondeur (46), dans laquelle est disposée la zone d'étanchéité du panneau (28).

16. Toit de véhicule avec une unité de couvercle ou de couverture selon l'une quelconque des revendications précédentes.
